Europäisches Patentamt

(19) European Patent Office

Office européen des brevets

(11) Publication number: **0 119 098**
**A2**

## (12) EUROPEAN PATENT APPLICATION

(21) Application number: **84301703.9**

(22) Date of filing: **13.03.84**

(51) Int. Cl.³: **B 23 K 11/32**
**B 23 K 11/04**

(30) Priority: **14.03.83 GB 8306958**
**21.12.83 GB 8333992**

(43) Date of publication of application:
**19.09.84  Bulletin  84/38**

(84) Designated Contracting States:
**AT BE CH DE FR GB IT LI LU NL SE**

(71) Applicant: **A.I. WELDERS LIMITED**
**98 Academy Street**
**Inverness, IV1 1LZ Scotland(GB)**

(72) Inventor: **Gourlay, Robert Redpath Runciman**
**36 Drumfield Road**
**Inverness IV2 4XJ Scotland(GB)**

(72) Inventor: **Sherrifs, Neill Maclaren**
**14 Abertarff Place**
**Fort Augustus Inverness Scotland(GB)**

(74) Representative: **Everitt, Christopher James**
**Wilders et al,**
**F.J. CLEVELAND & COMPANY 40/43 Chancery Lane**
**London WC2A 1JQ(GB)**

(54) A method and apparatus for aligning two work pieces.

(57) A rail alignment device (26) comprises suspended structure (62) which forms a downwardly-opening bight (65) and which carries precision locating stops (68, 69) hydraulic clamping cylinders (71 and 74) and pneumatically-operable electromechanical transducers (77 and 78) with sensing plungers all of which project into the bight (65), the adjacent rail ends which are to be butt-welded being received within the bight (65). The rail length (17) is clamped against the stops (68 and 69) by the opposed cylinders (71 and 74). The location of the other rail (16) relative to the structure (62) is sensed by the transducers (77 and 78) and the machine clamps are adjusted until those transducers (77 and 78) indicate alignment of the rails (16 and 17).

FIG.4

EP 0 119 098 A2

- 1 -

"A Method and Apparatus for Aligning Two Work Pieces"

DESCRIPTION

This invention relates to a method and apparatus for aligning two work pieces in bar form and of constant cross-section which are mounted in a butt-welding machine for welding together end to end by butt-welding by operation of the machine.

UK-A-1479531; UK-A-1479532 and UK-A-1479533 disclose a butt-welding machine incorporating an arrangement for automatically aligning two rails which are to be welded together end to end in a butt-welding machine. The disclosed alignment device comprises sensors mounted on an arm which is normally positioned to one side of a gap in which the weld is formed, the arm being swung about its pivot mounting into that gap to position the sensors adjacent the ends of the two rails. The proximity of those rail ends to the arm is sensed by the sensors and any displacement of either or both of those rails from a predetermined respective location relative to the arm is corrected automatically by adjustment means in the respective clamping mechanism by which the or each displaced rail is clamped in the machine, the adjustment means being activated by a feedback signal from the respective sensor until the sensed displacement has been eliminated and the rails are aligned. The arm is then swung back to its normal location where it remains whilst the rails are welded together.

Such an alignment device requires that the clamps for both rails be provided with adjustment means and therefore is not suitable for use in all kinds of rail welding machine because some commercially available rail welding machines are only provided with adjustment means for one of the clamps. Secondly the disclosed alignment device can only be used to align the adjacent side of the rail and the top of the rail. It cannot be used to align whichever side of the rail happens to be the running surface as is often required in practice.

According to one aspect of this invention there is provided a method of aligning two work pieces in bar form and of constant cross section which are mounted in a butt-welding machine for welding together end to end by butt-welding by operation of the machine, comprising inserting alignment means into a gap between heads of the machine, locating said alignment means alongside the adjacent ends of the work pieces which are in said gap, automatically sensing displacement of a predetermined respective surface portion of one of the work pieces from a predetermined location relative to said alignment means, effecting automatic operation of adjustment means in response to such displacement being sensed, said adjustment means being operable to adjust the mounting of one of the work pieces whereby to shift said predetermined respective surface portion to said predetermined location at which the work pieces are aligned, wherein, when the alignment means are located alongside the adjacent ends of the work pieces, they are clamped to the other work piece, viz. the work piece on which said predetermined respective surface portion is formed, thereby establishing a predetermined fixed spatial relationship between said end of said other work piece and said alignment means before automatic operation of said adjustment means is effected to shift said predetermined respective surface portion to said predetermined location.

Preferably automatically-operable mechanical handling equipment is used to insert the alignment means into the gap and to remove the alignment means from the gap when alignment of the work pieces has been established, but before the weld is formed, and to transfer the alignment means to a respective location remote from the gap wherein the alignment means are shielded from weld spatter during welding. The alignment means may be inserted into and removed from the gap by a lazy tong assembly which is incorporated in the mechanical handling equipment, the lazy tong assembly depending from a trolley which runs on a trackway above the butt-welding machine, the alignment means being transferred to the respective storage location remote from the gap by translational movement of the trolley on its trackway away from the gap when the lazy tong assembly is retracted. Alternatively the alignment means may be inserted into and removed from the gap by a robot.

Preferably the alignment means are located alongside the adjacent ends of the work pieces by the step of bringing precision locating stop means carried by structure of the alignment means into contact with a predetermined respective surface portion of said other work piece. The alignment means may be clamped to the other work piece by automatically-operating remotely controllable clamping means carried by the alignment means to clamp the work piece against said locating stop means.

Conveniently displacement of said predetermined respective surface portion from its predetermined location relative to said alignment means is sensed by automatic operation of pneumatically-operable electromechanical transducer means comprising a sensing plunger which is engaged with said predetermined respective surface portion by pneumatic pressure, the location of the plunger being measured by electromechanical means incorporated in the transducer means which emit an output which is a measure of the location of the plunger relative to structure of the alignment means which is clamped to the other work piece.

According to another aspect of this invention there is provided apparatus for aligning two work pieces in bar form and of constant cross-section which are mounted in a butt-welding machine for welding together end to end by butt-welding by operation of the machine, the butt-welding machine comprising a spaced pair of heads, each head being adapted to clamp a respective one of the pair of work pieces whilst they are being welded together end to end, the apparatus comprising alignment means including structure which forms a bight which receives the adjacent ends of the work pieces when the alignment means are inserted into the gap between the heads of the machine and are located alongside the adjacent ends of the work pieces to align them, means carried by said structure and projecting into the bight at selected locations and forming precision locating stops for a work piece, automatically operable clamping means carried by said structure and adapted to clamp that work piece against said precision locating stops when operated whereby to precisely locate said structure and that work piece one relative to the other, and proximity sensing means carried by said structure and adapted to coact with a predetermined respective surface portion of the other of said work pieces whereby to sense displacement of that surface portion from a predetermined location relative to said structure, said sensing means being associated with adjustment means incorporated in one of said heads whereby to effect automatic operation of said adjustment means in response to such displacement being sensed such that said adjustment means operate to adjust the mounting of the respective work piece whereby to shift the predetermined respective surface portion of that work piece to said predetermined location at which it is aligned with the work piece clamped against said precision locating stops.

Preferably the apparatus includes mechanical handling equipment operable to insert the alignment means into said gap in a direction transeverse to the work pieces until the work pieces are received within the bight and the precision locating stops contact the respective surface portions of the appropriate work piece, and to remove said alignment means from said gap when alignment of the work pieces is established, and to transfer the alignment means to a respective storage location remote from said gap wherein the alignment means are shielded from weld spatter. Conveniently the mechanical handling equipment comprises a trolley which runs on trackway supported above the butt-welding machine and extending over the gap, and a lazy tong assembly which depends from the trolley and supports the alignment means structure, the alignment means being inserted into the gap and withdrawn from the gap by extension and contraction of the lazy tong assembly when the trolley is positioned above the gap, and the alignment means being transferred from the gap to a respective storage location remote from said gap by translational movement of the trolley on said trackway when the lazy tong assembly is contracted. Alternatively the mechanical handling equipment may comprise a robot.

The sensing means carried by the structure may comprise pneumatically-operable electromechanical transducers including sensing plungers adapted to engage corresponding surface portions of said other of the work pieces that is clamped in one of the heads, and electromechanical means responsive to the relative location of each sensing plunger to structure of said transducer and to emit a related output signal operable to effect operation of adjustment means incorporated in said one head whereby to shift the respective work piece to a predetermined location relative to said structure of the alignment means.

Apparatus in which this invention is embodied is described now by way of example with reference to the accompanying drawings, of which:-

Figure 1 is a side elevation of a railway track butt-welding machine fitted with apparatus for aligning lengths of railway track that are to be welded together end to end;

Figure 2 is an elevation of the extensible support arrangement for the alignment unit incorporated in the machine shown in Figure 1;

Figure 3 is a partly-sectioned elevation of the alignment unit shown positioned around a pair of rail lengths for use, the section being on the line III-III in Figure 6;

Figure 4 is a partly-sectioned side elevation of Figure 3;

- 9 -

Figure 5 is a section on the line V-V in Figure 4; and

Figure 6 is a fragmentary view as seen on Arrow Y in Figure 4.

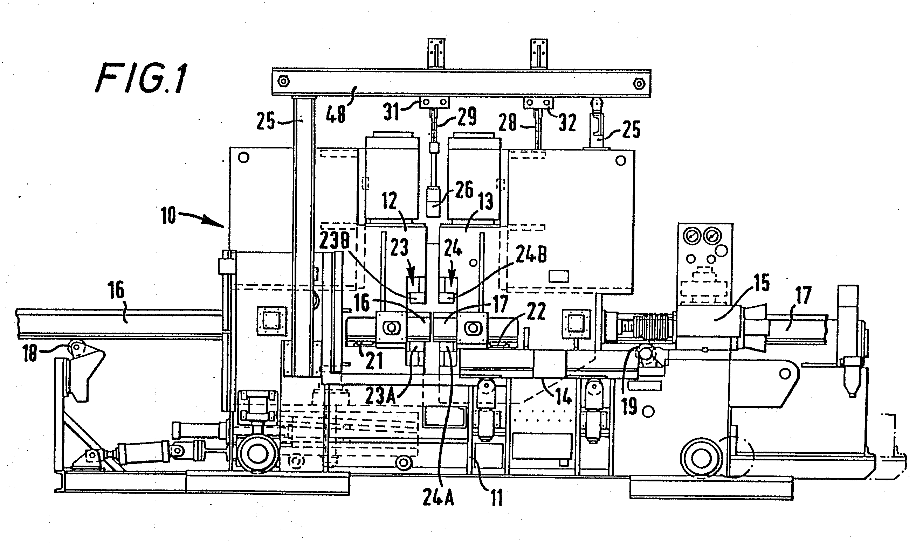

Figure 1 shows a flash butt-welding machine 10 which is described and illustrated in detail in the description filed with our co-pending European Patent Patent Application No.      which claims priority from our British Patent Application No. 8306958. Although a description of the parts of the machine thought to be relevant to the present invention follows, the attention of the reader is directed to the description of our co-pending European Patent Application No.      .

The machine 10 comprises a base 11, a static head 12 and a movable head 13. The movable head 13 is supported on the base 11 at 14 for rectilinear sliding movement towards and away from the static head 12, and is driven for such movement by a pair of hydraulic actuators 15, of which only one is visible in Figure 1.

Each head 12, 13 has a tunnel formed through it. Supporting means are provided for supporting two work pieces 16 and 17, each comprising a length of rail and extending through a respective one of the tunnels. The supporting means comprise rollers 18 and 19 which are resiliently supported upon the base 11 at locations which are separated by the two heads 12 and 13, and support pads 21 and 22 which are mounted in each head 12, 13 adjacent the end of the respective tunnel that is nearer the other head 12, 13 and hence adjacent the gap or confined space between the two heads 12 and 13. Each head 12, 13 has a vertically acting clamping unit, generally indicated at 23 and 24 respectively, at the edge of the gap between the two heads 12 and 13. Each clamping unit 23, 24 comprises a lower die 23A, 24A upon which the respective work piece 16, 17 normally rests, and an upper die 23B, 24B which is shown spaced from the respective work piece 16, 17 and which is operable in cooperation with the respective lower die 23A, 24A to apply a clamping force whereby the respective work piece 16, 17 is held within the respective head 12, 13 for welding. The dies 23A, 23B, 24A and 24B serve also as current carrying electrodes by which each work piece 16, 17 is connected in the electrical circuit which includes a welding transformer, the dies being formed of copper alloy.

The work pieces 16 and 17 are welded together end to end by operation of the butt-welding machine 10 in a conventional manner which briefly comprises the work piece 16 being held stationary in the static head 12 by the respective clamping arrangement 23 while the other work piece 17, which in turn is clamped within the movable head 13 by the respective clamping arrangement 24, is moved toward and away from the butt end of the work piece 16 in order to draw an arc between the work pieces 16 and 17 for the purpose of producing heat and, when the end portions of the work pieces 16 and 17 are sufficiently heated, the parts are suddenly pushed together with a larger force which is exerted by the hydraulic cylinders 15, in order to fuse the ends together. The resultant forging action raises an amount of upset metal around the periphery of the resultant length of track at the welded joint. A large amount of weld spatter which adheres to anything within the region of the gap between the two heads 12 and 13 is generated during the welding process.

Alignment of the work pieces 16 and 17 that are clamped in the respective head 12, 13 by the respective clamping unit 23, 24 is checked and any adjustment necessary to achieve the required degree of alignment is made before the work pieces are welded together.

- 12 -

A trolley is supported above the heads 12 and 13 by a gantry for movement along a path which is substantially parallel to the work pieces 16 and 17. The gantry is supported from the base 11 by vertical posts 25. An alignment unit 26, which forms part of an automatic alignment system which is incorpoarted in the machine 10, and a shear head (not shown in Figure 1) which is described in our co-pending European Patent Application No. are each suspended from the trolley by a respective depending extensible support arrangement 28, 29. Hence they are movable horizontally above the heads 12 and 13 with the trolley, and, when a respective part of the trolley from which they depend, is located directly above the weld location within the gap between the heads 12 and 13, they can be lowered to the vicinity of the adjacent ends of the work pieces 16 and 17 by extension of the respective extensible support arrangement 28, 29.

The trolley is pulled for movement relative to the gantry in the direction of the work pieces 16 and 17 by an endless belt (not shown) which is driven in either direction by remote control. Flexible service feeders (not shown) respectively connect hydraulic pressure and tank connections on the trolley

- 13 -

to a source of hydraulic fluid pressure and to an hydraulic fluid reservoir in the machine, as well as providing other service supplies to the trolley, such as electrical and pneumatic supplies.

The trolley includes two parallel beams which extend in directions which are generally normal to the direction of the work pieces 16 and 17 and which each serve as a respective monorail support for a respective carriage 31, 32. The alignment device 26 is suspended from the carriage 31. The shear head is suspended from the carriage 32. Each carriage 31, 32 is coupled to a respective endless belt (not shown) which is driven in either direction by remote control so that each carriage 31, 32 is caused to travel along the respective beam. A flexible service feeder (not shown) follows travel of the respective carriage 31, 32 and serves to convey hydraulic fluid under pressure respectively to and from the respective carriage 31, 32 to the pressure and tank connections on the trolley, as well as providing other services including electrical and pneumatic supplies to the respective carriage 31, 32.

The construction and operation of each of the carriages 31, 32 and of the respective extensible support arrangement 28, 29 that depends therefrom is

- 14 -

similar. For convenience that of the carriage 31 and the respective extensible support arrangement 29 will be described here in detail. It is to be understood that that description is substantially appropriate for the carriage 32 and the respective extensible support arrangement 28 which will not be described here in detail.

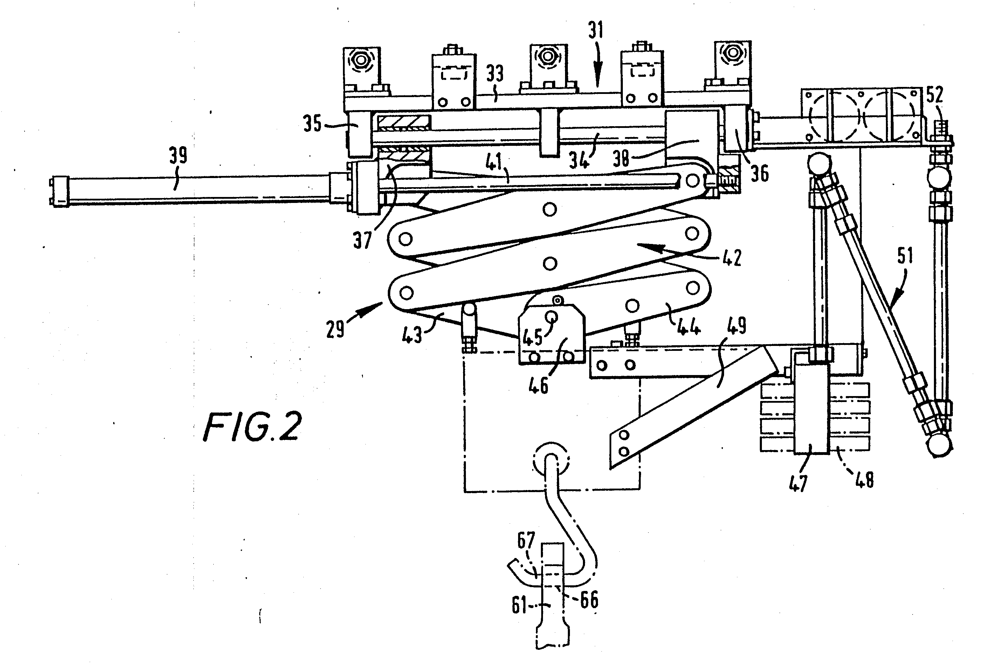

Figure 2 shows that the carriage 31 comprises a rectangular base plate 33 on which are mounted various rollers which roll on respective running surfaces formed on the respective beam that provides monorail support for the carriage 31. Two parallel rods 34 (of which only one is shown in Figure 2) are supported at either end in a respective block 35, 36 which depends from the base plate 33. A pair of T-shaped bearing blocks 37 and 38 are supported slidably upon the rods with their stems depending below the rods 34.

The cylinder bodies of two hydraulic cylinders 39 (of which only one is shown in Figure 2) are fixed to the bearing block 37 by the ends from which the respective cylinder projects. The cylinder rod 41 of each hydraulic cylinder 39 is fixed to the other bearing block 38. The depending stem portions of the T-shaped bearing blocks 37 and 38 pass

- 15 -

between the cylinder rods 41. The axes of the cylinders 39 are substantially parallel and are each in substantially the same vertical plane as the axis of a respective one of the rods 34.

A triple link lazy tong assembly 42 has two free relatively movable lever ends at one end. Each of those lever ends is pivotally connected to the depending stem portion of a respective one of the T-shaped bearing blocks 37 and 38 so that the assembly 42 depends from the bearing blocks 37 and 38. The pair of links 43 and 44 at the other end of the assembly 42 are hinged together by a common hinge pin 45 which is journalled in the limbs of a generally U-shaped balance block 46 from which the alignment unit 26 depends. It will be understood that the lazy tong assembly 42 is contracted when the hydraulic cylinders 39 are extended and that contraction of those hydraulic cylinders 39 to withdraw their cylinder rods 41 into their cylinder bodies, in conjunction with the lazy tong assembly 42, causes the bearing blocks 37 and 38 to slide towards one another and a central depending block so as to extend the lazy tong assembly 42 and lower the alignment unit 26.

A valve manifold 47 and a valve block 48 are supported by a support frame 49 which is fixed relative to the balance block 46. The valve manifold 47 is connected by an assembly 51 of articulated feed pipes to pressure and drain connections (one of which is shown at 52 in Figure 2) which are provided on the base plate 33 and which are connected to the hydraulic fluid supply and hydraulic reservoir of the machine 10 through the flexible hydraulic fluid feeders.

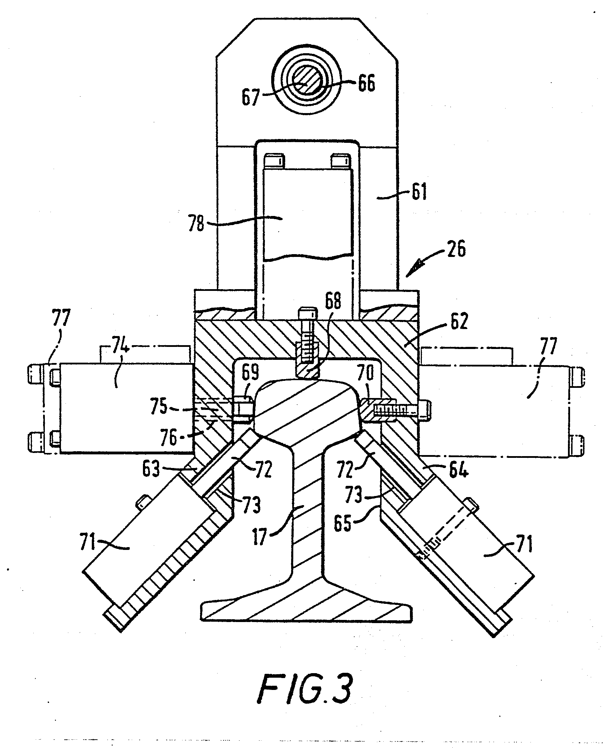

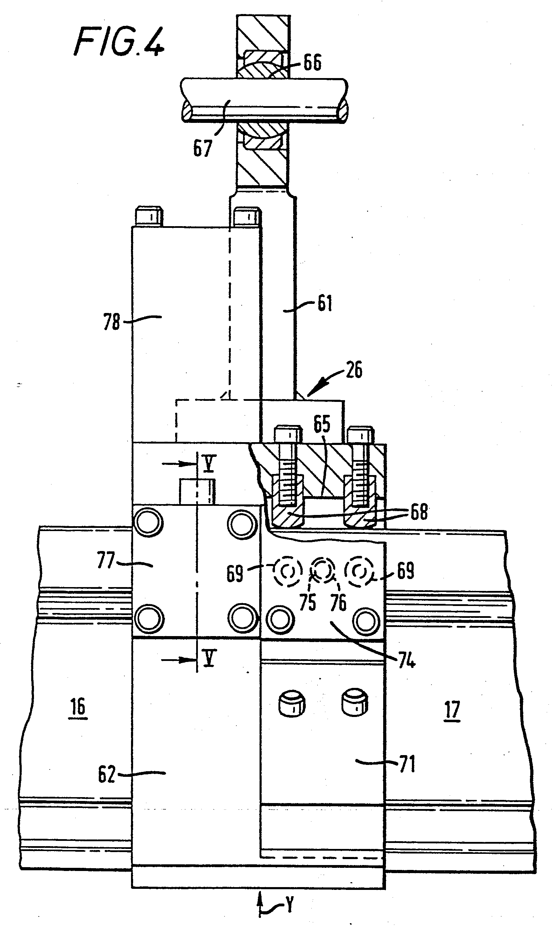

Figures 3 and 4 show that the alignment device 26 comprises a suspension arch 61 which is secured at its feet to a flat top surface of a generally U-shaped main body 62 which has outwardly cranked arms 63 and 64. Hence the bight 65 formed by the main body 62 has an upper portion with a substantially rectangular cross-section and a lower, open bottomed portion which has a substantially trapezoidal cross-section. A hole 66, formed centrally in the cross piece of the suspension arch 61, receives part 67 of a suspension hook which is fitted to the balance block 46 at the bottom of the respective lazy tong assembly 42 of the respective extensible support arrangement 29.

Six cylindrical anvils are fixed in the main body 62 between one end and the centre of that body 62. They project into the bight 65 and they are located within the main body 62 with precision so that their ends are precisely located abutments.
Two of the anvils, which are referenced 68, project
downwardly from the top wall of the main body 62 with
their axes in the longitudinal plane of symmetry of
the main body 62. Another pair of the anvils,
referenced 69, project laterally into the bight 65
from locations in the side wall 63 above the elbow of
that side wall 63. The other two anvils 70 project
laterally into the bight 65 from locations in the side
wall 64 above the elbow of that side wall 64. The
plane in which the axes of the laterally projecting
anvils 69 and 70 lie is normal to the longitudinal
plane of symmetry of the main body 62 and the axis of
each of the anvils 69 and 70 lies in a respective
transverse plane which passes through the axis of a
respective one of the downwardly projecting anvils 68
and which is normal to the longitudinal plane of
symmetry of the main body 62, each anvil 69 and a
respective one of the anvils 70 being coaxial.

An hydraulic cylinder 71 is mounted by its
body on the lower, outwardly sloping portion of each
cranked arm 63, 64 with its plunger 72 projecting into
the bight 65 through a respective aperture 73 in the
respective cranked arm 63, 64. The plungers 72
project upwardly into the bight 65 with their axes oblique to the longitudinal plane of symmetry of the main body 62. Each of two other hydraulic cylinders 74 is mounted by its body on the outer surface of the upper portion of each cranked arm 63, 64 with its plunger 75 projecting through a respective aperture 76 in the upper portion of the respective cranked arm 63. The axes of the plungers 75 are in the same plane as the axes of the laterally projecting anvils 69 and 70. The axes of the four plungers 72 and 75 all lie in a single transverse plane which is substantially midway between the transverse planes in which the axes of the anvils 68, 69 and 70 lie.

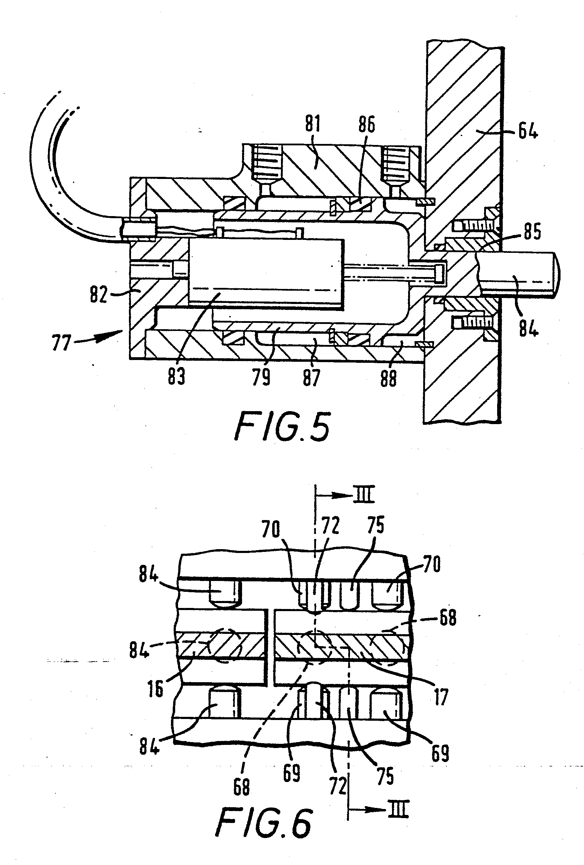

Two pneumatically-operable electromechanical transducer assemblies 77 which have their longitudinal axes in substantially the same plane as the axes of the laterally projecting anvils 69 and 70, and a third such transducer 78 which has its longitudinal axis in the longitudinal plane of symmetry of the main body 62, are mounted on the half of the main body 62 which does not carry the anvils 68, 69 and 70 and the hydraulic cylinders 71 and 74. One of the transducer assemblies 77 is mounted on the upper portion of the cranked arm 63 and the other one is mounted on the upper portion of the cranked arm 64. The transducer assemblies 77 and 78 are similar and Figure 5 illustrates the construction and installation of the transducer assembly 77 that is mounted on the cranked arm 64 by way of example.

Figure 5 shows that the transducer assembly 77 comprises a cup-shaped piston 79 slidably located in a stepped bore formed in a housing 81. The smaller diameter end of the stepped bore is closed by a plug 82 on which an electromechanical transducer 83 is mounted inside the housing 81. Leads from the terminals of the transducer 83 are led through the end plug 82 for connection into a control system of the machine 10.

The housing 81 is mounted on the outer surface of the upper portion of the cranked arm 64 at the larger diameter end of the stepped bore. A plunger 84, which is formed integrally with the cup-shaped piston 79, projects through an aperture 85 in the cranked arm 64 and is a sliding fit in that aperture 85. A piston ring 86 is fitted around the cup-shaped piston 79 and slides within the larger diameter portion of the stepped bore so as to divide the annular space surrounding the piston 79 into two chambers 87 and 88. The chambers 87 and 88 are connected into a pneumatic control system of the machine 10. The transducer 83 is operatively associated with the piston 79 so that the output signal from the transducer 83 is a measure of the location of the plunger 84 relative to the cranked arm 64.

It follows that the output signal from the transducer 83 of the other transducer assembly 77 is a measure of the location of the plunger 84 of that other assembly 77 relative to the cranked arm 63 and that the output signal from the transducer 83 of the transducer assembly 78 is a measure of the location of the plunger 84 of the assembly 78 relative to the top main body 62.

The control system that controls the cylinders 71 and 74 and the transducer assemblies 77 and 78 of the alignment device 26 and the electronic circuit that includes the leads of the transducers 83, are incorporated in a main control system of the machine which controls operation of the various hydraulic devices including the actuators 15, the clamping units 23 and 24 and means for driving the trolley and the carriages 31 and 32, the extensible support arrangements 28 and 29 and various cylinders and which includes various limit switches incorporated in the shear head and elsewhere in the machine.

The work piece 16 may be a single length of rail but is more likely to be a length of railway track comprising a number of lengths of rail previously welded together end to end. It is supported by the support roller 18 and the support pad 21. The work piece 17 is a single length of rail.

The clamping units 23 and 24 are operated to clamp the work pieces 16 and 17 in position within the respective heads 12 and 13, once those work pieces have been positioned in the respective head 12, 13 of the machine 10 for welding together end to end.

The trolley is driven from a stowage location at one end of the gantry in which both its monorail support beams are displaced laterally from the gap between the heads 12 and 13 to a location in which the monorail support beam for the carriage 31 is vertically above that gap as shown in Figure 1. The carriage 31 is driven from one end of its support beam to the other end of that beam at which the alignment device 26 is positioned vertically above the gap between the two heads 12 and 13, and thus above the ends of the two work pieces 16 and 17 in that gap, as shown in Figure 1. The other carriage 32 remains at the end of its monorail support beam remote from the gap. The extensible support arrangements 28 and 29 are both in their contracted conditions as shown in Figures 1 and 2 during such movement of the trolley and the carriage 31. It will be understood that each extensible support arrangement 28, 29 is held in its contracted condition by the action of hydraulic fluid under pressure supplied to the respective valve block 48 through the respective articulated hydraulic feed pipe assembly 51.

The hydraulic fluid pressure maintaining the alignment device extensible support arrangement 29 contracted is relieved automatically by opening the appropriate return path to the reservoir tank through the connections 52, when the alignment device 26 is in position vertically above the adjacent ends of the work pieces 16 and 17. Consequently the weight of the alignment device 26 and the respective valve manifold 47 and valve block 48 causes extension of the respective lazy tong assembly 42 so that the alignment device 26 is lowered onto the work piece 17. The plungers 72 and 75 of the hydraulic cylinders 71 and 74, and the plungers 84 of the transducer assemblies 77 and 78 are in the retracted condition as the alignment device 26 is lowered. Lowering of the alignment device 26 is terminated by abutment of the downwardly projecting fixed anvils 68 with the top of the work piece 17.

The pair of laterally projecting anvils 69 or 70 that can abut the side of the head of the work piece 17 that will be the running surface of the railway track are placed in abutment with that side of the rail head. The actuators 71 and the actuator 74 that is on the opposite side of the work piece 17 from the running surface are then operated to extend their plungers 72 and 75 so that the main body 62 is clamped to the work piece 17 which is located relative to the main body 62 by the anvils 68 and whichever of the anvils 69 and 70 that abut the running surface of the rail head. The piston 79 of the transducer assembly 78 and whichever one of the pistons 79 of the transducer assemblies 77 that can abut the side of the rail head of the work piece 16 that is to be the running surface, are driven by pneumatic pressure to engage the respective plungers 84 with the top and the running surface of the work piece 17. The output signals from the transducers 83 are computed and converted into drive signals to effect automatic adjustment of the static head 12 by operation of its vertically acting hydraulic cylinder and a power driven wedge arrangement incorporated in it to adjust the vertical position of the static head 12 relative to the movable head 13 and the base 11 and/or to operate similar devices which adjust the position of the static head 12 laterally relative to the movable head 13 and the base 11. Hence the work piece 16 is automatically brought into alignment with the work piece 17 by appropriate automatic adjustment of the position of the static head 12.

The appropriate hydraulic cylinders 71 and 74 and transducer assemblies 77 and 78 are operated to retract the respective plungers 72, 75 and 84 when alignment of the work pieces 16 and 17 has been established. The connections of the respective hydraulic feed pipe assembly 51 are switched so that hydraulic fluid under pressure is supplied through the connections 52 of the carriage 31 to the valve manifold 47 and valve block 48 to effect raising of the alignment device 26 by contraction of the respective lazy tong assembly 42.

The carriage 31 is driven to the end of its monorail support beam remote from the gap once the alignment device extensible support 29 has been contracted, and the trolley is driven to the end of its travel on the gantry so that it, the alignment device 26 and the shear head are positioned in the stowage location which is displaced from the weld location both sideways and in a direction parallel to the work pieces 16 and 17. The alignment device 26 and the shear head are shielded from the weld location by a suitably located flash guard (not shown).

The butt-welding machine 10 is operated in the usual manner to effect a butt-welded joint between the work pieces 16 and 17.

The automatic alignment system, including the alignment device 26 that is incorporated in the machine 10, is calibrated before being used to align a pair of work pieces which are mounted in the heads 12 and 13 of the machine 10 for welding together end to end. The calibration procedure comprises clamping a true bar against the two pairs of four stops formed by the two downwardly projecting anvils 68 and the pair of laterally projecting anvils 69 or 70 which are to be used, depending upon on which side of the rail the running surfaces are formed, operating the cylinders 71 and the cylinder 74 that is opposite the selected pair of laterally projecting anvils 69, 70 to clamp the true bar against the appropriate anvils 68 and 69 or 70, and setting the controls of the system to a selected datum such as zero. Once calibrated the system is operable to sense displacement from the datum of the work piece to which the alignment device main body 62 is not clamped and to signal adjustment

- 26 -

of the static head 12 until no such displacement is sensed.

If the alignment device is provided with only one pair of laterally projecting anvils 69 and only one laterally projecting pneumatic cylinder 77 which is opposite the pair of laterally projecting anvils 69, as disclosed in the description filed with our copending European Patent Application No. the device can be used to align running surfaces regardless of which side of the work pieces those surfaces are, providing the pair of anvils 69 are brought into engagement with that side of the work piece 17. It may be necessary to rotate the alignment device 26 through $180^{\circ}$ to enable the anvils 69 to be brought into contact with the intended running surface on the work piece 17.

We have found the lazy tong assembly 42 described above attractive for raising and lowering the alignment device 26 and the shear head, the relative lack of rigidity of that arrangement proving to be an asset in this application.

An alternative form of mechanical handling equipment may comprise an arm of a robot mechanism.

Simple precisely-located projections may be used instead of the separable anvils 68, 69 and 70

described and illustrated.

- 28 -

CLAIMS

1. A method of aligning two work pieces (16 and 17) in bar form and of constant cross section which are mounted in a butt-welding machine (10) for welding together end to end by butt-welding by operation of the machine (10), comprising inserting alignment means (26) into a gap between heads (12 and 13) of the machine, locating said alignment means (26) alongside the adjacent ends of the work pieces (16 and 17) which are in said gap, automatically sensing displacement of a predetermined respective surface portion of one (16) of the work pieces (16 and 17) from a predetermined location relative to said alignment means (26), effecting automatic operation of adjustment means in response to such displacement being sensed, said adjustment means being operable to adjust the mounting of one (16) of the work pieces (16 and 17) whereby to shift said predetermined respective surface portion to said predetermined location at which the work pieces (16 and 17) are aligned, characterised in that, when the alignment means (26) are located alongside the adjacent ends of the work pieces (16 and 17), they are clamped to the other work piece (17), viz. the work piece on which said predetermined surface portion is not formed, thereby establishing a predetermined fixed spatial relationship between said end of said other work piece (17) and said alignment means (26) before automatic operation of said adjustment means is effected to shift said predetermined respective surface portion to said predetermined location.

2. A method according to Claim 1, wherein automatically-operable mechanical handling equipment is used to insert the alignment means (26) into the gap and to remove the alignment means (26) from the gap when alignment of the work pieces (16 and 17) has been established, but before the weld is formed, and to transfer the alignment means (26) to a respective location remote from the gap wherein the alignment means (26) are shielded from weld spatter during welding.

3. A method according to Claim 2, wherein the alignment means (26) are inserted into and removed from the gap by a lazy tong assembly (42) which is incorporated in the mechanical handling equipment, the lazy tong assembly (42) depending from a trolley which runs on a trackway above the butt-welding machine (10), the alignment means (26) being transferred to the respective storage location remote from the gap by translational movement of the trolley on its trackway away from the gap when the lazy tong assembly (42) is retracted.

4. A method according to any one of Claims 1 to 3, wherein the alignment means (26) are located alongside the adjacent ends of the work pieces (16 and 17) by the step of bringing precision locating stop means (68, and 69 or 70) carried by structure (65) of the alignment means (26) into contact with a predetermined respective surface portion of said other work piece (17).

5. A method according to Claim 4, wherein the alignment means (26) are clamped to the other work piece (17) by automatically-operating remotely controllable clamping means (71 and 74) carried by the alignment means (26) to clamp the work piece (17) against said locating stop means (68, and 69 or 70).

6. A method according to any one of Claims 1 to 5, wherein displacement of said predetermined respective surface portion from its predetermined location relative to said alignment means (26) is sensed by automatic operation of pneumatically-operable electromechanical transducer means (77 and 78) comprising a sensing plunger (84) which is engaged with said predetermined respective surface portion by pneumatic pressure, the location of the plunger (84) being measured by electromechanical means (83) incorporated in the transducer means (77, 78) which emit an output which is a measure of the location of the plunger (84) relative to structure (62) of the alignment means (26) which is clamped to the other work piece (17).

7.      Apparatus for aligning two work pieces (16 and 17) in bar form and of constant cross-section which are mounted in a butt-welding machine (10) for welding together end to end by butt-welding by operation of the machine (10), the butt-welding machine (10) comprising a spaced pair of heads (12 and 13) each head (12, 13) being adapted to clamp a respective one of the pair of work pieces (16 and 17) whilst they are being welded together end to end, the apparatus comprising alignment means (26) including structure (62) which forms a bight (65) which receives the adjacent ends of the work pieces (16 and 17) when the alignment means (26) are inserted into the gap

- 32 -

between the heads (12 and 13) of the machine (10) and are located alongside the adjacent ends of the work pieces (16 and 17) to align them, means carried by said structure (62) and projecting into the bight (65) at selected locations and forming precision locating stops (68, 69 and 70) for a work piece (17), automatically operable clamping means (71 and 74) carried by said structure (62) and adapted to clamp that work piece (17) against said precision locating stops (68, and 69 or 70) when operated whereby to precisely locate said structure (62) and that work piece (17) one relative to the other, and proximity sensing means carried by said structure (62) and adapted to coact with a predetermined respective surface portion of the other (16) of said work pieces (16 and 17) whereby to sense displacement of that surface portion from a predetermined location relative to said structure (62), said sensing means being associated with adjustment means incorporated in one (12) of said heads (12 and 13) whereby to effect automatic operation of said adjustment means in response to such displacement being sensed such that said adjustment means operate to adjust the mounting of the respective work piece (16) whereby to shift the predetermined respective surface portion of said other work piece (16) to said predetermined location at which it is aligned with the work piece (17) clamped against said precision locating stops.

8.   Apparatus according to Claim 7, including mechanical handling equipment operable to insert the alignment means (26) into said gap in a direction transverse to the work pieces (16 and 17) until the work pieces (16 and 17) are received within the bight (65) and the precision locating stops (68, and 69 or 70) contact the respective surface portions of the appropriate work piece (17), and to remove said alignment means (26) from said gap when alignment of the work pieces (16 and 17) is established, and to transfer the alignment means (26) to a respective storage location remote from said gap wherein the alignment means (26) are shielded from weld spatter.

9.   Apparatus according to Claim 8, wherein the mechanical handling equipment comprises a trolley which runs on trackway supported above the butt-welding machine (10) and extending over the gap, and a lazy tong assembly (42) which depends from the trolley and supports the alignment means structure (62), the alignment means (26) being inserted into the

- 34 -

gap and withdrawn from the gap by extension and contraction of the lazy tong assembly (42) when the trolley is positioned above the gap, and the alignment means (26) being transferred from the gap to a respective storage location remote from said gap by translational movement of the trolley on said trackway when the lazy tong assembly (42) is contracted.

10. Alignment means according to any one of Claims 7 to 9, wherein said sensing means carried by said structure comprise pneumatically-operable electromechanical transducers (77 and 78) including sensing plungers (84) adapted to engage corresponding surface portions of said other (16) of the work piece (16 and 17) that is clamped in one (12) of the heads (12 and 13), and electromechanical means (83) responsive to the relative location of each sensing plunger (84) to structure (81) of said transducer (77, 78) and to emit a related output signal operable to effect operation of said adjustment means whereby to shift the respective work piece (16) to a predetermined location relative to said structure (62) of the alignment means (26).

0119098

FIG.1

*FIG.2*

FIG.3

FIG.4

FIG.5

FIG.6